# EUROPEAN PATENT SPECIFICATION

(11) **EP 2 976 918 B1**
(45) Date of publication and mention of the grant of the patent: **07.11.2018**
(21) Application number: 14770703.8
(22) Date of filing: 17.01.2014
(51) Int. Cl.: H04W 48/18, H04W 52/02, H04W 72/12, H04W 68/12, H04W 84/04, H04W 84/12, H04W 88/06

(54) **PROCEDURES FOR CONTROLLING ALTERNATIVE RADIO-ACCESS TECHNOLOGY (RAT) IN MULTI-RAT CAPABLE TERMINALS**
VERFAHREN ZUR STEUERUNG ALTERNATIVER FUNKZUGANGSTECHNOLOGIEN IN MULTI-RAT-FÄHIGEN ENDGERÄTEN
PROCÉDURES DE COMMANDE DE TECHNOLOGIES D'ACCÈS RADIO (RAT) ALTERNATIVES DANS DES TERMINAUX APTES AU MULTI-RAT

(30) Priority: 20.03.2013 US 201361803585 P
(43) Date of publication of application: 27.01.2016
(73) Proprietor: Telefonaktiebolaget LM Ericsson (publ), 164 83 Stockholm (SE)
(72) Inventor: BERGSTRÖM, Joakim, S-114 30 Stockholm (SE); PERSSON, Håkan, S-171 57 Solna (SE); TEYEB, Oumer, S-177 44 Solna (SE); WANG, Yu, S-169 74 Solna (SE); LINDHEIMER, Christofer, S-583 36 Linköping (SE); ROMMER, Stefan, S-426 74 Västra Frölunda (SE); PALM, Håkan, S-352 61 Växjö (SE); SEDLACEK, Ivo, 186 00 Praha 8 (CZ); MESTANOV, Filip, S-191 49 Sollentuna (SE); JOHANSSON, Niklas, S-191 38 Sollentuna (SE); RAYMENT, Stephen, Ottawa Ontario K1R 1E2 (CA); TOUATI, Samy, San Jose California 95134 (US); BERGSTRÖM, Mattias, S-120 71 Stockholm (SE); ROELAND, Dinand, S-192 77 Sollentuna (SE); VIKBERG, Jari, S-153 38 Järna (SE); HEDBERG, Tomas, S-112 69 Stockholm (SE)
(74) Representative: Ericsson
(86) International application number: PCT/SE2014/050049
(87) International publication number: WO 2014/148970

(56) References cited:
- WO-A1-2009/033945
- WO-A1-2011/123531
- WO-A1-2012/000084
- WO-A2-2004/031488
- WO-A2-2012/093349
- US-A1- 2008 167 090
- US-A1- 2011 222 523
- US-A1- 2013 005 353

## Description

### TECHNICAL FIELD

The present application is generally related to wireless devices that support multiple radio access technologies and more particularly relates to the coordinated control and selection of the multiple radio access technology functions in these devices.

### BACKGROUND

The wireless local-area network (WLAN) technology known as "Wi-Fi" has been standardized by IEEE in the 802.11 series of specifications (i.e., as "IEEE Standard for Information technology-Telecommunications and information exchange between systems. Local and metropolitan area networks-Specific requirements. Part 11: Wireless LAN Medium Access Control (MAC) and Physical Layer (PHY) Specifications"). As currently specified, Wi-Fi systems are primarily operated in the 2.4 GHz or 5 GHz bands.

The IEEE 802.11 specifications regulate the functions and operations of the Wi-Fi access points or wireless terminals, collectively known as "stations" or "STA," in the IEEE 802.11, including the physical layer protocols, Medium Access Control (MAC) layer protocols, and other aspects needed to secure compatibility and inter-operability between access points and portable terminals. Because Wi-Fi is generally operated in unlicensed bands, communication over Wi-Fi may be subject to interference sources from any number of both known and unknown devices. Wi-Fi is commonly used as wireless extensions to fixed broadband access, e.g., in domestic environments and in so-called hotspots, like airports, train stations and restaurants.

Recently, Wi-Fi has been subject to increased interest from cellular network operators, who are studying the possibility of using Wi-Fi for purposes beyond its conventional role as an extension to fixed broadband access. These operators are responding to the ever-increasing market demands for wireless bandwidth, and are interested in using Wi-Fi technology as an extension of, or alternative to, cellular radio access network technologies. Cellular operators that are currently serving mobile users with, for example, any of the technologies standardized by the 3rd-Generation Partnership Project (3GPP), including the radio-access technologies known as Long-Term Evolution (LTE), Universal Mobile Telecommunications System (UMTS)/Wideband Code-Division Multiple Access (WCDMA), High Speed Packet Access (HSPA) and Global System for Mobile Communications (GSM), see Wi-Fi as a wireless technology that can provide good additional support for users in their regular cellular networks.

As used herein, the term "operator-controlled Wi-Fi" indicates a Wi-Fi deployment that on some level is integrated with a cellular network operator's existing network, where the operator's radio access network(s) and one or more Wi-Fi wireless access points may even be connected to the same core network and provide the same or overlapping services. Currently, several standardization organizations are intensely active in the area of operator-controlled Wi-Fi. In 3GPP, for example, activities to connect Wi-Fi access points to the 3GPP-specified core network are being pursued. In the Wi-Fi alliance (WFA), activities related to certification of Wi-Fi products are undertaken, which to some extent is also driven from the need to make Wi-Fi a viable wireless technology for cellular operators to support high bandwidth offerings in their networks. In these standardization efforts, the term "Wi-Fi offload" is commonly used and indicates that cellular network operators seek means to offload traffic from their cellular networks to Wi-Fi, e.g., during peak-traffic-hours and in situations when the cellular network needs to be off-loaded for one reason or another, e.g., to provide a requested quality-of-service, to maximize bandwidth, or simply for improved coverage.

For a wireless operator, offering a mix of two technologies that have been standardized in isolation from each other raises the challenge of providing intelligent mechanisms for co-existence. One area that needs these intelligent mechanisms is connection management.

Many of today's portable wireless devices (referred to hereinafter as "user equipments" or "UEs") support Wi-Fi in addition to one or several 3GPP cellular technologies. In many cases, however, these terminals essentially behave as two separate devices, from a radio access perspective. The 3GPP radio access network and the UE-based modems and protocols that are operating pursuant to the 3GPP specifications are generally unaware of the wireless access Wi-Fi protocols and modems that may be simultaneously operating pursuant to the 802.11 specifications. Techniques for coordinated control of these multiple radio-access technologies are needed.

US 2008/0167090 discloses a method for efficient assessment of communication service levels in a mobile station having multiple communication interfaces. US 2011/0222523 describes a method of radio interworking in heterogeneous wireless communication networks. US 2013/0005353 discloses radio based location power profiles. WO 2011/123531 discloses a method and apparatus for multi-radio coexistence. WO 2012/000084 discloses a method and system for radio access technology selection.

### SUMMARY

The present invention generally relates to means and methods for controlling certain wireless communication protocols and modems from signals initiated by other wireless communication protocols and modems. Some embodiments of the present invention target battery consumption in wireless terminals that support both Wi-Fi wireless access and at least one 3GPP-specified radio access technology.

In one aspect of the present invention, a method is provided for controlling Wi-Fi scanning, including when and/or how it should be performed. According to some of these methods, the Wi-Fi scanning is controlled based on interaction over protocols and mechanisms through a 3GPP-standardized access technology.

In another aspect of the present invention, means for controlling the Wi-Fi scanning are provided, such that Wi-Fi scanning is limited to situations that are determined feasible. In some embodiments, such situations are defined through communication over a 3GPP-standardized access technology protocol.

In another aspect of the present invention, methods for controlling the 3GPP modem and processing parts in the UE are provided. In some embodiments, the 3GPP modem and processing parts are controlled based on interaction over protocols and mechanisms through a Wi-Fi standardized access technology.

In yet another aspect of the present invention, means for controlling 3GPP modem and processing parts are provided, such that, for example, 3GPP cell selection is limited to situations that are determined feasible. In some embodiments, such situations are defined through communication over a Wi-Fi standardized access.

According to a first specific aspect, there is provided a method for controlling different parts of a portable device that are able to communicate over at least a first radio access technology protocol and a second radio access technology protocol, where said first and second radio access technology protocols are different and wherein said method includes the steps of detecting in logical parts that operate a first radio access technology protocol that at least parts of a second radio access technology protocol should be activated; and transmitting an indication from logical parts that operates a first radio access technology protocol to logical parts that operates a second radio access technology protocol where said indication is an input to said second radio access technology protocol to activate parts of second radio access technology protocol.

In some embodiments, said first radio access technology protocol is a radio access technology protocol according to the 3GPP standard. In some embodiments, said first radio access technology protocol is LTE. In other embodiments, said first radio access technology protocol is GSM. In other embodiments, said first radio access technology protocol is WCDMA. In some embodiments, said second radio access technology protocol is a radio access technology protocol according to the IEEE 802.11 standard. In some embodiments, said first radio access technology protocol is a radio access technology protocol according to the IEEE 802.11 standard.

In other embodiments, said second radio access technology protocol is a radio access technology protocol according to the 3GPP standard. In some embodiments, said second radio access technology protocol is LTE. In other embodiments, said second radio access technology protocol is WCMDA. In other embodiments, said second radio access technology protocol is GSM.

In some embodiments, the step of detecting in logical parts that operates a first radio access technology protocol that at least parts of a second radio access technology protocol should be activated includes receiving a request for transmitting such an indication from the network side of said first radio access technology protocol.

In some embodiments the method further comprises, in response to receiving a request for transmitting such an indication from the network side of said first radio access technology protocol, the step of detecting the radio quality or performance; and determining whether to transmit the indication from logical parts that operates a first radio access technology protocol to logical parts that operates a second radio access technology protocol based on the detected radio quality or performance.

In other embodiments, the step of detecting in logical parts that operates a first radio access technology protocol that at least parts of a second radio access technology protocol should be activated includes detecting within the portable device without any request thereof received from the network side of said first radio access technology.

In some embodiments, the step of detecting in logical parts that operate a first radio access technology protocol that at least parts of a second radio access technology protocol should be activated or deactivated is based on detected radio quality or performance.

In other embodiments, the step of detecting in logical parts that operate a first radio access technology that at least parts of a second radio access technology protocol should be activated or deactivated is based on any one or more of the speed at which the portable device is moving; the location of the portable device; the data throughput of the portable device; the data volume or buffer status of the portable device; and the level of the battery in the portable device.

In some embodiments, the step of transmitting an indication from logical parts that operates a first radio access technology protocol to logical parts that operates a second radio access technology protocol where said indication is an input to said second radio access technology protocol to activate parts of second radio access technology protocol includes an indication to activate a radio modem. In some embodiments, said second radio access technology protocol is a radio access technology protocol according to the IEEE 802.11 standard.

In some embodiments, said second radio access technology protocol parts originally are in an energy saving mode.

In some embodiments, the indication is an input to said second radio access technology protocol to activate parts of second radio access technology protocol, and wherein the method further comprises the step of activating the logical parts that operate the second radio access protocol in response to the indication.

In some embodiments the second radio access protocol is a radio access technology protocol according to the 3GPP standard, and the step of activating the logical parts comprises putting the portable device into a connected mode with respect to the second radio access protocol.

In other embodiments, the second radio access protocol is a radio access technology protocol according to the 3GPP standard, and the step of activating the logical parts comprises putting the portable device into a connected or idle mode with respect to the second radio access protocol.

In some embodiments, the indication is an input to said second radio access technology protocol to de-activate parts of second radio access technology protocol, and wherein the method further comprises the step of de-activating the logical parts that operate the second radio access protocol in response to the indication.

In some embodiments, the second radio access protocol is a radio access technology protocol according to the 3GPP standard, and the step of de-activating the logical parts comprises putting the portable device into an idle or detached mode with respect to the second radio access protocol.

In other embodiments, the second radio access protocol is a radio access technology protocol according to the 3GPP standard, and the step of de-activating the logical parts comprises putting the portable device into a detached mode with respect to the second radio access protocol.

In some embodiments the transmitted indication further comprises information on an action for the logical parts that operate the second radio access technology protocol to take in addition to activating or deactivating.

According to a second aspect, there is provided a method for controlling different parts of a portable device that are able to communicate over at least a first radio access technology protocol and a second radio access technology protocol, where said first and second radio access technology protocols are different and wherein said method includes the steps of detecting in logical parts that operate a first radio access technology protocol that at least parts of a second radio access technology protocol should be de-activated; and transmitting an indication from logical parts that operates a first radio access technology protocol to logical parts that operates a second radio access technology protocol where said indication is an input to said second radio access technology protocol to de-activate parts of second radio access technology protocol.

In some embodiments, said first radio access technology protocol is a radio access technology protocol according to the 3GPP standard. In some embodiments, said first radio access technology protocol is LTE. In other embodiments, said first radio access technology protocol is GSM. In other embodiments, said first radio access technology protocol is WCDMA. In some embodiments, said second radio access technology protocol is a radio access technology protocol according to the IEEE 802.11 standard.

In some embodiments, said first radio access technology protocol is a radio access technology protocol according to the IEEE 802.11 standard. In other embodiments, said second radio access technology protocol is a radio access technology protocol according to the 3GPP standard. In some embodiments, said second radio access technology protocol is LTE. In other embodiments, said second radio access technology protocol is WCMDA. In other embodiments, said second radio access technology protocol is GSM.

In some embodiments, the step of detecting in logical parts that operates a first radio access technology protocol that at least parts of a second radio access technology protocol should be de-activated includes receiving a request for transmitting such an indication from the network side of said first radio access technology protocol.

In some embodiments the method further comprises, in response to receiving a request for transmitting such an indication from the network side of said first radio access technology protocol, the step of detecting the radio quality or performance; and determining whether to transmit the indication from logical parts that operates a first radio access technology protocol to logical parts that operates a second radio access technology protocol based on the detected radio quality or performance.

In some embodiments, the step of detecting in logical parts that operates a first radio access technology protocol that at least parts of a second radio access technology protocol should be de-activated includes detecting within the portable device without any request thereof received from the network side of said first radio access technology.

In some embodiments, the step of detecting in logical parts that operate a first radio access technology protocol that at least parts of a second radio access technology protocol should be activated or deactivated is based on detected radio quality or performance.

In other embodiments, the step of detecting in logical parts that operate a first radio access technology that at least parts of a second radio access technology protocol should be activated or deactivated is based on any one or more of the speed at which the portable device is moving; the location of the portable device; the data throughput of the portable device; the data volume or buffer status of the portable device; and the level of the battery in the portable device.

In some embodiments, the step of transmitting an indication from logical parts that operates a first radio access technology protocol to logical parts that operates a second radio access technology protocol where said indication is an input to said second radio access technology protocol to de-activate parts of second radio access technology protocol includes an indication to activate a radio modem. In some embodiments, said second radio access technology protocol is a radio access technology protocol according to the IEEE 802.11 standard.

According to a third aspect, there is provided a portable device configured for communication over at least a first radio access technology protocol and a second radio access technology protocol, where said first and second radio access technology protocols are different, said portable device comprising a first modem/processing circuit adapted for communication over the first radio access protocol; and a second modem/processing circuit adapted for communication over the second radio access protocol; wherein the first modem/processing circuit is further adapted to detect that at least parts of the second modem/processing circuit should be activated; and transmit an indication to the second modem/processing circuit, where said indication is an input to the second modem/processing circuit to activate parts of second radio access technology protocol.

In some embodiments, said first radio access technology protocol is a radio access technology protocol according to the 3GPP standard. In some embodiments, said first radio access technology protocol is LTE. In other embodiments, said first radio access technology protocol is GSM. In other embodiments, said first radio access technology protocol is WCDMA. In some embodiments, said second radio access technology protocol is a radio access technology protocol according to the IEEE 802.11 standard. In some embodiments, said first radio access technology protocol is a radio access technology protocol according to the IEEE 802.11 standard.

In other embodiments, said second radio access technology protocol is a radio access technology protocol according to the 3GPP standard. In some embodiments, said second radio access technology protocol is LTE. In other embodiments, said second radio access technology protocol is WCMDA. In other embodiments, said second radio access technology protocol is GSM.

In some embodiments, the first modem/processing circuit detects that at least parts of the second modem/processing circuit should be activated by receiving a request for transmitting such an indication from the network side of said first radio access technology protocol.

In some embodiments, the first modem/processing circuit detects that at least parts of the second modem/processing circuit should be activated by detecting within the portable device without any request thereof received from the network side of said first radio access technology.

In some embodiments, transmitting an indication from logical parts that operates a first radio access technology protocol to logical parts that operates a second radio access technology protocol where said indication is an input to said second radio access technology protocol to activate parts of second radio access technology protocol includes an indication to activate a radio modem. In some embodiments, said second radio access technology protocol is a radio access technology protocol according to the IEEE 802.11 standard.

In some embodiments, said second radio access technology protocol parts originally are in an energy saving mode.

In some embodiments, the indication is an input to said second radio access technology protocol to activate parts of second radio access technology protocol, and wherein the method further comprises the step of activating the logical parts that operate the second radio access protocol in response to the indication.

In some embodiments the second radio access protocol is a radio access technology protocol according to the 3GPP standard, and the step of activating the logical parts comprises putting the portable device into a connected mode with respect to the second radio access protocol.

In other embodiments, the second radio access protocol is a radio access technology protocol according to the 3GPP standard, and the step of activating the logical parts comprises putting the portable device into a connected or idle mode with respect to the second radio access protocol.

In some embodiments, the indication is an input to said second radio access technology protocol to de-activate parts of second radio access technology protocol, and wherein the method further comprises the step of de-activating the logical parts that operate the second radio access protocol in response to the indication.

In some embodiments, the second radio access protocol is a radio access technology protocol according to the 3GPP standard, and the step of de-activating the logical parts comprises putting the portable device into an idle or detached mode with respect to the second radio access protocol.

In other embodiments, the second radio access protocol is a radio access technology protocol according to the 3GPP standard, and the step of de-activating the logical parts comprises putting the portable device into a detached mode with respect to the second radio access protocol.

In some embodiments the transmitted indication further comprises information on an action for the logical parts that operate the second radio access technology protocol to take in addition to activating or deactivating.

According to a fourth aspect, there is provided a portable device configured for communication over at least a first radio access technology protocol and a second radio access technology protocol, where said first and second radio access technology protocols are different, said portable device comprising a first modem/processing circuit adapted for communication over the first radio access protocol; and a second modem/processing circuit adapted for communication over the second radio access protocol; wherein the first modem/processing circuit is further adapted to detect that at least parts of the second modem/processing circuit should be de-activated; and transmit an indication the second modem/processing circuit, where said indication is an input to said second radio access technology protocol to de-activate parts of second radio access technology protocol.

In some embodiments, said first radio access technology protocol is a radio access technology protocol according to the 3GPP standard. In some embodiments, said first radio access technology protocol is LTE. In other embodiments, said first radio access technology protocol is GSM. In other embodiments, said first radio access technology protocol is WCDMA.

In some embodiments, said second radio access technology protocol is a radio access technology protocol according to the IEEE 802.11 standard. In some embodiments, said first radio access technology protocol is a radio access technology protocol according to the IEEE 802.11 standard. In other embodiments, said second radio access technology protocol is a radio access technology protocol according to the 3GPP standard. In some embodiments, said second radio access technology protocol is LTE. In other embodiments, said second radio access technology protocol is WCMDA. In other embodiments, said second radio access technology protocol is GSM.

In some embodiments, the first modem/processing circuit is adapted to detect hat at least parts of the second modem/processing circuit should be de-activated by receiving a request for transmitting such an indication from the network side of said first radio access technology protocol.

In some embodiments, the first modem/processing circuit is adapted to detect hat at least parts of the second modem/processing circuit should be de-activated by detecting within the portable device without any request thereof received from the network side of said first radio access technology.

In some embodiments, transmitting an indication from logical parts that operates a first radio access technology protocol to logical parts that operates a second radio access technology protocol where said indication is an input to said second radio access technology protocol to de-activate parts of second radio access technology protocol includes an indication to activate a radio modem. In some embodiments, said second radio access technology protocol is a radio access technology protocol according to the IEEE 802.11 standard.

According to a fifth aspect, there is provided a computer program product having a set of computer program instructions embodied therein, the computer program instructions being configured such that, on execution by a processor, the processor is caused to carry out any of the methods described above.

According to a sixth aspect, there is provided a method in a network operating according to a first radio access technology protocol for controlling a portable device that is able to communicate over at least the first radio access technology protocol and a second radio access technology protocol, where said first and second radio access technology protocols are different, said method includes the steps of detecting in the network that logical parts in the portable device that operates a second radio access technology protocol should be activated or deactivated; and transmitting an indication to the portable device that the portable device should activate or deactivate the logical parts that operate the second radio access technology protocol.

In some embodiments said first radio access technology protocol is a radio access technology protocol according to the 3GPP standard and wherein said second radio access technology protocol is a radio access technology protocol according to the IEEE 802.11 standard.

In other embodiments said first radio access technology protocol is a radio access technology protocol according to the IEEE 802.11 standard and wherein said second radio access technology protocol is a radio access technology protocol according to the 3GPP standard.

In some embodiments the step of detecting in the network that logical parts in the portable device that operates a second radio access technology protocol should be activated or deactivated comprises receiving an indication from a network that operates the second radio access technology protocol.

According to a seventh aspect, there is provided a network node for use in a network operating according to a first radio access technology protocol, the network node being for use with a portable device that is able to communicate over at least the first radio access technology protocol and a second radio access technology protocol, where said first and second radio access technology protocols are different, the network node comprising processing circuitry adapted to detect that logical parts in the portable device that operates a second radio access technology protocol should be activated or deactivated; and transmit an indication to the portable device that the portable device should activate or deactivate the logical parts that operate the second radio access technology protocol.

According to an eighth aspect, there is provided a method in a network operating according to a first radio access technology protocol for controlling a portable device that is able to communicate over at least the first radio access technology protocol and a second radio access technology protocol, where said first and second radio access technology protocols are different, and wherein logical parts in the portable device that operate the first radio access technology protocol are deactivated, said method includes the steps of detecting in the network that the logical parts in the portable device that operate the first radio access technology protocol should be activated; and transmitting an indication to a network operating according to the second radio access technology that the portable device should activate the logical parts that operate the first radio access technology protocol.

In some embodiments said first radio access technology protocol is a radio access technology protocol according to the 3GPP standard and wherein said second radio access technology protocol is a radio access technology protocol according to the IEEE 802.11 standard.

In other embodiments said first radio access technology protocol is a radio access technology protocol according to the IEEE 802.11 standard and wherein said second radio access technology protocol is a radio access technology protocol according to the 3GPP standard.

According to a ninth aspect, there is provided a network node for use in a network operating according to a first radio access technology protocol, the network node being for use with a portable device that is able to communicate over at least the first radio access technology protocol and a second radio access technology protocol, where said first and second radio access technology protocols are different, wherein logical parts in the portable device that operate the first radio access protocol are deactivated, the network node comprising processing circuitry adapted to detect that the logical parts in the portable device that operate the first radio access technology protocol should be activated; and transmit an indication to a network operating according to the second radio access technology that the portable device should activate the logical parts that operate the first radio access technology protocol.

### BRIEF DESCRIPTION OF THE DRAWINGS

Features, objects and advantages of the presently disclosed techniques will become apparent to those skilled in the art by reading the following detailed description where references will be made to the appended figures in which:
Figure 1 illustrates a number of nodes in a Wi-Fi wireless access network;
Figure 2 illustrates an LTE radio access network and a number of core network nodes;
Figure 3 illustrates a network where both Wi-Fi wireless access and LTE radio access is connected to the same packet core network;
Figure 4 illustrates a terminal capable of communication over both at least one 3GPP-specified access technology and 802.11-specified technology;
Figures 5-9 illustrate signal diagrams according to several embodiments of the presently disclosed techniques;
Figure 10 is a block diagram of an example user equipment;
Figure 11 is a block diagram of an exemplary network node according to various embodiments;
Figure 12 is a block diagram of an alternative network node according to various embodiments;
Figure 13 is a flow chart illustrating the method of operating a portable device;
Figure 14 is a flow chart illustrating the method of operating a network; and
Figure 15 is a flow chart illustrating another method of operating a network.

### DETAILED DESCRIPTION OF THE INVENTION

In the discussion that follows, specific details of particular embodiments of the present invention are set forth for purposes of explanation and not limitation. It will be appreciated by those skilled in the art that other embodiments may be employed apart from these specific details. Furthermore, in some instances detailed descriptions of well-known methods, nodes, interfaces, circuits, and devices are omitted so as not obscure the description with unnecessary detail. Those skilled in the art will appreciate that the functions described may be implemented in one or in several nodes. Some or all of the functions described may be implemented using hardware circuitry, such as analog and/or discrete logic gates interconnected to perform a specialized function, application specific integrated circuits (ASICs), programmable logic arrays (PLAs), etc. Likewise, some or all of the functions may be implemented using software programs and data in conjunction with one or more digital microprocessors or general purpose computers. Where nodes that communicate using the air interface are described, it will be appreciated that those nodes also have suitable radio communications circuitry. Moreover, the technology can additionally be considered to be embodied entirely within any form of computer-readable memory, including non-transitory embodiments such as solid-state memory, magnetic disk, or optical disk containing an appropriate set of computer instructions that would cause a processor to carry out the techniques described herein.

Hardware implementations of the present invention may include or encompass, without limitation, digital signal processor (DSP) hardware, a reduced instruction set processor, hardware (e.g., digital or analog) circuitry including but not limited to application specific integrated circuit(s) (ASIC) and/or field programmable gate array(s) (FPGA(s)), and (where appropriate) state machines capable of performing such functions.

In terms of computer implementation, a computer is generally understood to comprise one or more processors or one or more controllers, and the terms computer, processor, and controller may be employed interchangeably. When provided by a computer, processor, or controller, the functions may be provided by a single dedicated computer or processor or controller, by a single shared computer or processor or controller, or by a plurality of individual computers or processors or controllers, some of which may be shared or distributed. Moreover, the term "processor" or "controller" also refers to other hardware capable of performing such functions and/or executing software, such as the example hardware recited above.

The discussion that follows frequently refers to "UEs", which is the 3GPP term for end user wireless devices. It should be appreciated, however, that the techniques and apparatus described herein are not limited to 3GPP UEs, but are more generally applicable to end user wireless devices or terminals (e.g., portable cellular telephones, smartphones, wireless-enabled tablet computers, etc.) that are useable in cellular systems and that support multiple radio access technologies (RATs). It should also be noted that the current disclosure relates to end user wireless devices that support, for example, both a wireless local area network (WLAN) radio access technology (RAT), such as one or more of the IEEE 802.11 standards, and one or more wide-area cellular radio access technologies, such as any of the wide-area radio access standards maintained by 3GPP. End user devices are referred to in Wi-Fi document as "stations," or "STA" - it should be appreciated that the term "UE" or "terminal" as used herein should be understood to refer to a STA, and vice-versa, unless the context clearly indicates otherwise.

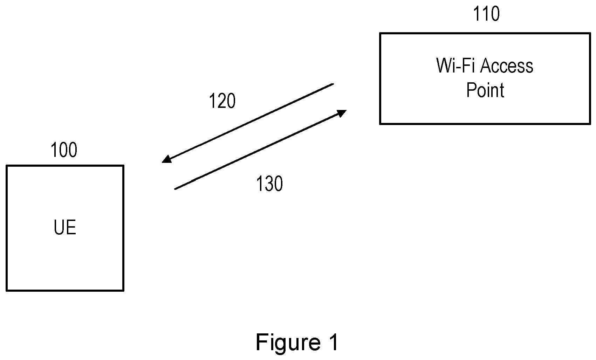

Figure 1 illustrates a wireless terminal UE 100 able to communicate, using 802.11-specified protocols, with a Wi-Fi access point 110. Downlink communication 120 is directed from the Wi-Fi access point 110 to the UE 100, while uplink communication 130 is directed from the UE 100 to the Wi-Fi access point 110.

For the UE to find an access point to connect to, a beacon signal is transmitted from the Wi-Fi access point. This beacon signal indicates details about the access point and provides the UE with enough information to be able to send a request for access. Accessing a Wi-Fi access point includes an information exchange between UE 100 and Wi-Fi Access point 110, including, for example, probe requests and responses, and authentication requests and response. The exact content of these sequences are omitted for clarity.

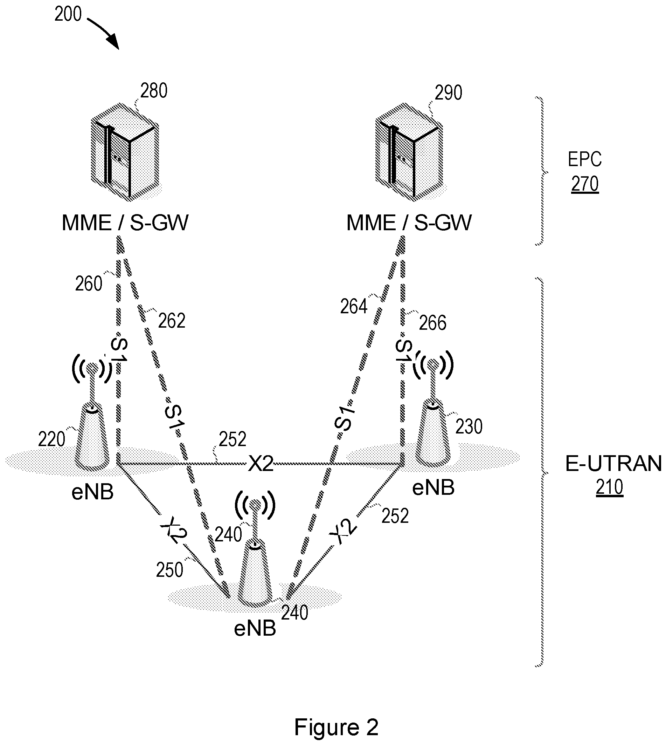

Figure 2 illustrates a portion of the LTE radio access network and controller nodes. The LTE network 200 is more formally known as the Evolved UMTS Terrestrial Radio Access Network (E-UTRAN) 210, and includes base stations 220, 230, 240, called enhanced NodeBs (eNBs or eNodeBs), which provide the E-UTRA (Evolved UMTS Terrestrial Radio Access) user plane and control plane protocol terminations towards the User Equipment (UE). It should be noted that even though LTE is used as an example of a radio access technology (RAT) herein, the procedures described herein can be applied to other wide-area RATs, including (but not limited to) other 3GPP RATs.

The eNBs 220, 230, 240 are interconnected with each other by means of the X2 interface 250, 252, 254. The eNBs 220 ,230, 240 are also connected by means of the S1 interface 260, 262, 264, 266 to the Evolved Packet Core (EPC) 270, and more specifically to Mobility Management Entities (MMEs) 280, 290, by means of the S1-MME interface, and to the Serving Gateway (S-GW) 280, 290 by means of the S1-U interface. The S1 interface supports many-to-many relation between MMEs / S-GWs and eNBs.

The eNB hosts functionalities such as Radio Resource Management (RRM), radio bearer control, admission control, header compression of user plane data towards serving gateway, and routing of user plane data towards the serving gateway. The MME 280, 290 is the control node that processes the signalling between the UE and the core network 270. The main functions of the MME 280, 290 are related to connection management and bearer management, which are handled via Non Access Stratum (NAS) protocols. The S-GW 280, 290 is the anchor point for UE mobility, and also includes other functionalities such as temporary downlink (DL) data buffering while the UE is being paged, packet routing and forwarding the right eNB, gathering of information for charging and lawful interception. A packet data network (PDN) Gateway (P-GW), not shown in Figure 2, is the node responsible for UE Internet Protocol (IP) address allocation, as well as for Quality-of-Service (QoS) enforcement.

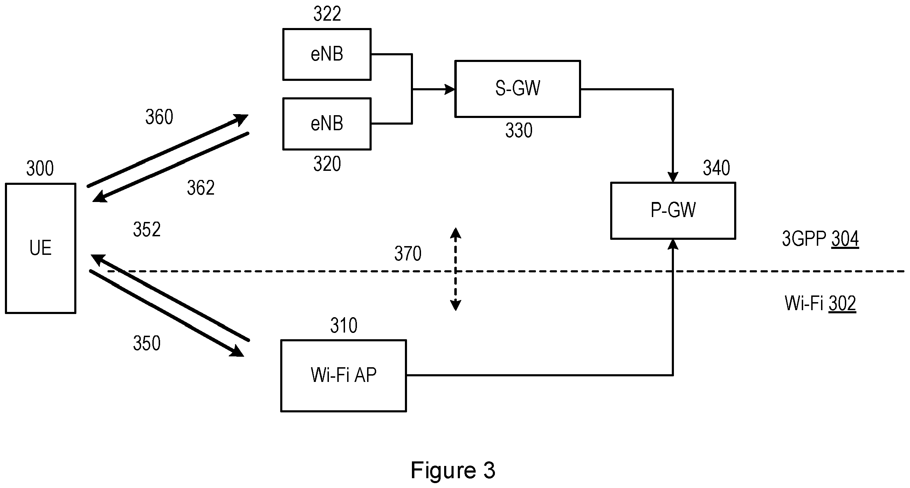

Figure 3 illustrates a network where the LTE radio access parts (eNBs) 320, 322 and a Wi-Fi wireless access point 310 are both connected to the same P-GW 340. In the case of the LTE radio access parts, the eNBs 320, 322 are connected to the P-GW 340 via an S-GW 330. A UE 300 is shown that is capable of being served both from the Wi-Fi Access Point 310 and the LTE eNBs 320, 322. Arrows 350 and 352 illustrate the uplink (UL) and downlink (DL) transmissions between the UE 300 and the Wi-Fi AP 310 respectively and arrows 360 and 362 illustrate the uplink (UL) and downlink (DL) transmissions between the UE 300 and the eNBs respectively. Figure 3 illustrates one possible way of connecting a Wi-Fi access network 302 to the same core network as the 3GPP-specified access network 304. It should be noted that the presently disclosed techniques are not restricted to scenarios where the Wi-Fi access network 302 is connected in this way; scenarios where the networks are more separate, e.g., as illustrated in Figure 1 and 2, are also possible scenarios.

There can be an interface 370 between the Wi-Fi and 3GPP domains, whereby the two networks can exchange information that can be used to facilitate on steering traffic over the right network. One example of such information exchanged via the interface 370 is load conditions in the two networks. The two networks can also exchange information with regard to the context of the UE 300, so that each can be aware of whether the UE is being served by the other network, as well as some details of the connection over the other network (e.g. traffic volume, throughput, etc...)

It should be noted that an access-point controller (AC) functionality may also exist in the Wi-Fi domain 302 that controls the Wi-Fi AP 310. This functionality, though not depicted in the figure for the sake of clarity, can be physically located in 310, 340 or another separate physical entity.

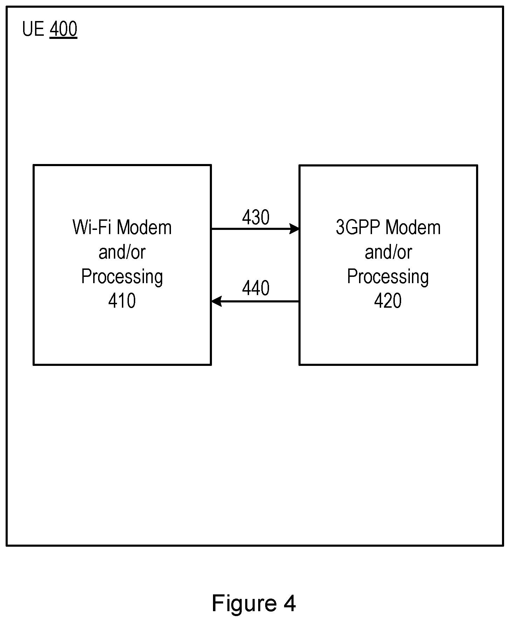

Figure 4 illustrates a UE 400 capable of communicating both over a 3GPP-specified access technology and also over an 802.11 Wi-Fi specified access technology. For illustrative purposes, the processing and modem related to the Wi-Fi parts 410 are separated from the processing and modem related to the 3GPP parts 420. It will be appreciated that the implementation of these portions could be integrated on the same hardware unit, or can be carried out using physically distinct hardware and/or hardware-software combinations.

As noted above, many smartphones on the market today support Wi-Fi connectivity in addition to supporting one or more cellular radio-access technologies (RATs), such as the several RATs standardized by 3GPP. With many of these smartphones, the Wi-Fi connection manager, which handles communications to and from Wi-Fi access points, immediately tries to attach to a Wi-Fi access point (AP) as soon as the device is within the coverage area of the AP, provided that the service set identification (SSID) of the Wi-Fi AP is identified/pre-defined and credentials are provided (usually manually). To be able to do this, the device performs Wi-Fi scanning, i.e., searching for Wi-Fi access points to connect to, on a more-or-less continuous basis. This continuous scanning drains battery power from the UE, shortening the time between re-charges.

In an operator controlled Wi-Fi scenario, a UE may usually be served with communication through the cellular 3GPP network. Occasionally, e.g., when moving indoors, or when cellular performance deteriorates and there is good Wi-Fi coverage, it would be advantageous, from a network-performance perspective or a user-experience perspective, or both, for the UE to receive services through Wi-Fi instead of through the 3GPP radio access network. In scenarios where a UE is currently being served by a 3GPP network, it is not necessary for a UE to continuously scan for Wi-Fi access points whenever Wi-Fi operation is enabled. Likewise, when the UE is connected to a Wi-Fi access point, it need not necessarily search out other connection means on a continuous basis.

Thus, there is a need for improved mechanisms that overcome the shortcoming of having UEs that are capable of providing service through both a 3GPP-specified radio access and a Wi-Fi wireless access technology, in situations when the UE is connected to one, from continuously scanning for access opportunities of the other.

Correspondingly, in situations when a UE is connected over Wi-Fi, it would be beneficial to be able to control the 3GPP-standardized parts such that, for battery saving purposes, it would be possible to prevent radio parts of the UE from consuming energy.

Several of the embodiments described below generally relate to means and methods for controlling certain wireless communication protocols and modems from signals initiated by other wireless communication protocols and modems. Particular embodiments target battery consumption in wireless terminals where such terminals support both at least one 3GPP specified radio access technology and Wi-Fi wireless access. Note that while the detailed embodiments discussed below are described in reference to the IEEE 802.11 standards commonly referred to as "Wi-Fi," the techniques and apparatus described are not necessarily limited to those standards, but may be applied more generally to other wireless local area network (WLAN) technologies.

In one embodiment of the present invention, the Wi-Fi parts 410 are put in a stand-by mode, or a power-saving mode, or are turned off, when the UE is connected and communicating over a 3GPP-specified technology using 3GPP parts 420. In these embodiments, when the 3GPP parts 420 detect that it is beneficial to consider connections over Wi-Fi, the 3GPP parts 420 send a signal over interface 440 to the Wi-Fi parts of the UE to activate the Wi-Fi parts 410. Note that this detection may be carried out by the 3GPP parts 420 alone, in some embodiments, or by a separate UE control processor (not shown), while in other embodiments the 3GPP parts 420 may receive an indication from the 3GPP network 304 that triggers this detection. In either case, the Wi-Fi parts 410 are activated, in response to the signal from 3GPP parts 420, and may then follow procedures as specified in the 802.11 specification, including scanning, probe request, authentication and association to an access point.

In another embodiment, communication occurs over Wi-Fi using uplink and downlink channels 350, 352 and, at some point, it is detected that connection to a 3GPP network 304 is reasonable or beneficial. The 3GPP parts 420 of the UE 400 are put in a stand-by mode or in a mode where power consumption is decreased in comparison to normal operation. When it is detected that it would be beneficial to consider connections over 3GPP, e.g., by the UE parts 410 or by the Wi-Fi network (illustrated as the Wi-Fi AP 310), the Wi-Fi parts 410 send a signal over the interface 430 to the 3GPP parts of the UE, to activate the 3GPP parts 420. The 3GPP parts 420 are then activated, and may then follow procedures as specified in 3GPP specifications, dependent on, e.g., the specific access technology or technologies (GSM, UMTS/WCDMA, HSPA, LTE, etc.) supported by the 3GPP parts 420.

In another embodiment, both the Wi-Fi parts 410 and the 3GPP parts 420 are initially active. This could be because communication has occurred over both interfaces simultaneously, for example. 3GPP specifies procedures enabling this kind of communication for MAPCON (multi access PDN connectivity) and (IFOM) IP Flow Mobility in Technical Specification 3GPP TS 23.402. At some point in time, it may be detected that one of the communication links 360/362 or 350/352 to one of the accesses has deteriorated or has been interrupted, and that further communication is no longer possible or desired. This could be because there is no more data to send over the communication link, the communication has been handed over to another access technology, for example. In these situations, according to one embodiment of the present invention, in a situation when communication is only continued over 3GPP links 360, 362, the 3GPP parts of the UE 420 may signal to Wi-Fi parts 410 of the UE 400 to enter a stand-by or low power mode, over interface 440. Similarly, in situations when communication is only continued over Wi-Fi links 350, 352, the Wi-Fi parts 410 may signal to 3GPP parts 420 to enter a stand-by or low power mode, in some embodiments of the invention, using interface 430.

It should be noted that embodiments that relate to turning on Wi-Fi does not necessarily have to mean that parts that handle 3GPP technologies are put in stand-by mode automatically. Correspondingly, embodiments that relate to turning on 3GPP do not necessarily have to mean that parts that handle Wi-Fi are put in stand-by mode automatically.

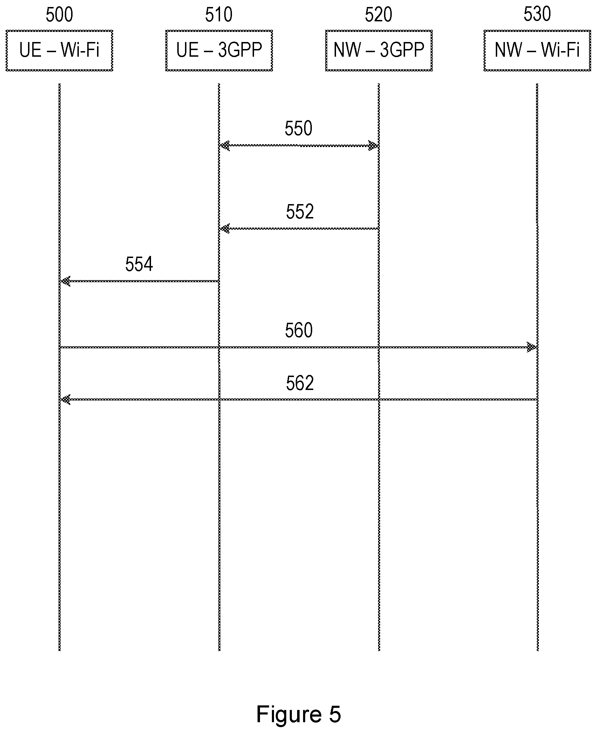

Figure 5 illustrates an example of communication over the above-described interfaces and communication links. Figure 5 depicts two logical entities in the UE, UE-Wi-Fi 500 and UE-3GPP 510 - which are the parts of the UE that handle communication over Wi-Fi communication links and communication over 3GPP links, respectively. Further depicted are network parts NW-3GPP 520, which include the access network side of the communication, e.g., an eNB in the case of LTE, a Node B in the case of WCDMA, or radio base stations (RBS) in the case of GSM. It should also be noted that the NW-3GPP 520 does not only point to one single node, but also to, for example, any controller node that is involved in making decisions related to over what radio interface or where in the network user data or control traffic should be routed. For example, in the LTE case, an MME or serving gateway (S-GW) node, in the WCDMA / UMTS case, a Radio Network Controller node (RNC), or in the GSM case, a Base Station Controller Node (BSC). The NW-3GPP 520 is thus not necessarily limited to any one particular node on the network side.

Still further depicted in Figure 5 is the network part of Wi-Fi, NW-Wi-Fi 530, which refers to the Wi-Fi access network side. It should be noted that the NW-Wi-Fi 530 does not necessarily refer only to a Wi-Fi access point, but could also include any number of nodes on the network side that may be involved in making decisions related to over what radio interface or where in the network user data or control traffic should be routed.

According to one embodiment of the present invention, communication 550 occurs between the UE-3GPP 510 and the NW-3GPP 520. From the network side of 3GPP, there is an indication 552 transmitted to UE-3GPP 510, including a request to turn on Wi-Fi parts of the UE to explore possibilities to communicate over Wi-Fi. The UE-3GPP 510 transmits an indication 554 to the UE-Wi-Fi 500 to activate and potentially start communication towards NW-Wi-Fi 530. As a next step, communication 560, 562 may occur, initiated by UE-Wi-Fi 500.

According to an alternative embodiment of the invention, the signal from the NW-3GPP 552 may not be the trigger to send indication 554 from the UE-3GPP 510 to the UE-Wi-Fi 500. Instead, the trigger could be initiated by the UE-3GPP 510 detecting circumstances and itself taking the decision to send the indication 554 to the UE-Wi-Fi 500, e.g., based on detected radio quality or performance.

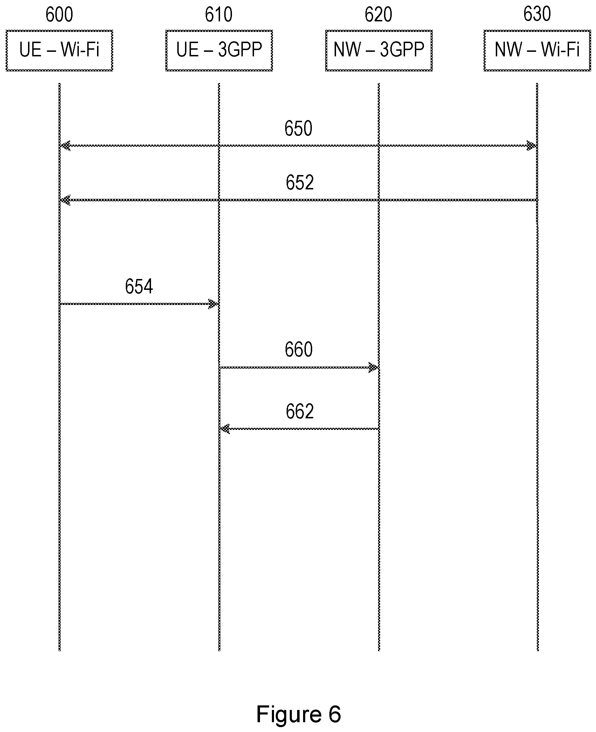

Figure 6 illustrates the same logical entities in the UE and the NW as in Figure 5. According to another embodiment of the present invention, communication 650 occurs between the UE-Wi-Fi 600 and the NW-Wi-Fi 630. From the network side of Wi-Fi, there is an indication 652 transmitted to UE-Wi-Fi 600 including a request to turn on 3GPP parts of the UE to explore possibilities to communicate over 3GPP. The UE-Wi-Fi 600 transmits an indication 654 to the UE-3GPP 610 to activate and potentially start communication towards NW-3GPP 620. As a next step, communication 660, 662 may occur, initiated by UE-3GPP 610. According to an alternative embodiment, the signal from the NW-Wi-Fi 652 may not be the trigger to send indication 654 from the UE-Wi-Fi 600 to the UE-3GPP 610. Instead, the trigger could be initiated by the UE-Wi-Fi 600 detects circumstances and itself takes the decision to send the indication 654 to the UE-3GPP 610, e.g., based on detected radio quality or performance.

Note that while several distinct embodiments are described above, in connection with Figures 5 and 6, other embodiments of the present invention may combine one, several, or all of these embodiments. Thus, for example, a single UE may be adapted so as to implement all of the above embodiments, under various circumstances. For instance, a UE may have a UE-3GPP part 510 that is adapted to activate UE-Wi-Fi part 500 in response to an indication 552 received from NW-3GPP part 520, and also in response to autonomously determining that radio quality and/or performance conditions are such that UE-Wi-Fi part 500 should be activated. Likewise, the UE-Wi-Fi part 500 in that same UE may be adapted to activate UE-3GPP part 510 in response to an indication 652 received from NW-Wi-Fi 630, and also in response to autonomously determining that radio quality and/or performance conditions are such that UE-3GPP part 510 should be activated.

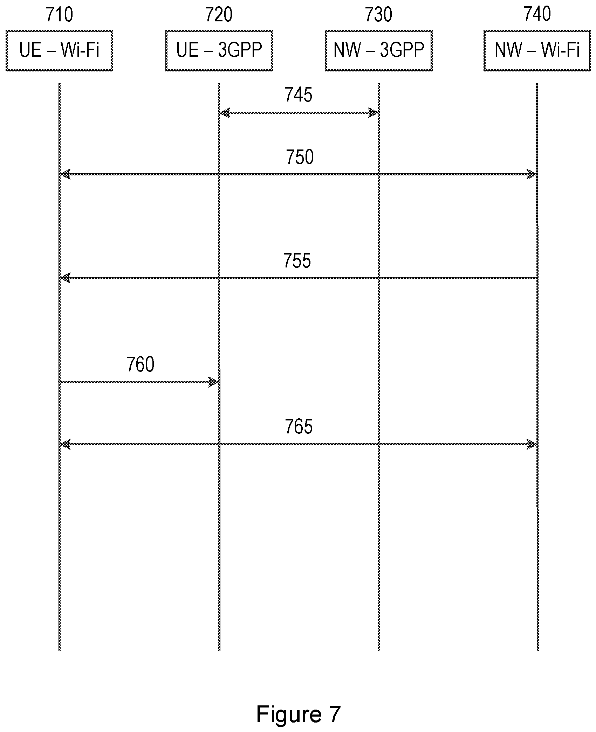

It should be still further noted that other embodiments include corresponding signalling flows and apparatus for de-activating, or turning off, one UE access part or the other. One example is shown in Figure 7, where parts 710, 720, 730, and 740 correspond to parts 510, 520, 530 and 540 in Figure 5. In the illustrated scenario, the UE is communicating with both the NW-3GPP 730 and NW-Wi-Fi 740, via communication links 745 and 750, respectively. At some point, NW-Wi-Fi 740 sends a message to UE-Wi-Fi 710, indicating that UE-3GPP 720 can be deactivated, or at least partially turned off. In response, UE-Wi-Fi part 710 sends a message to UE-3GPP part 720, carrying out that deactivation. In an alternative of this approach, the indication does not mean that the UE-3GPP part 720 should be immediately turned off; instead it means that the UE-3GPP part 720 is allowed to be turned off, if deemed suitable by other controlling mechanisms. Subsequently, the UE communicates only with NW-Wi-Fi 740, via link 765.

The definition of the 3GPP parts being "on"/"off" depends on the particular implementation of these techniques. One possible implementation is that the 3GPP parts are "on" when the terminal is in connected mode while the 3GPP parts are "off" when the terminal is in idle mode or detached. Another possible implementation is that the 3GPP parts are "on" when the terminal is in connected or idle mode while the 3GPP parts are "off" when the terminal is detached from the 3GPP network. In connected mode the UE-3GPP is known on a cell-level, i.e. known to the 3GPP RAN. In idle state the terminal is known in a larger area (called tracking area) and can be reached by the NW-3GPP by using paging messages. When the UE-3GPP is detached it is not reachable by the NW-3GPP.

It will be appreciated that a corresponding signalling flow applies to a scenario where the UE-Wi-Fi part 710 is deactivated. In this case, a message sent to the UE-Wi-Fi part 710 may indicate that the part should be completely or partly deactivated, in some embodiments or instances. In others, the indication does not mean that the Wi-Fi should be turned off; instead it means that the Wi-Fi is allowed to be turned off, if deemed suitable by other controlling mechanisms. If, for example, the UE-Wi-Fi should be kept on to scan for the user's private-Wi-Fi it is not feasible to turn off the UE-Wi-Fi. This indication would then not prohibit that the UE-Wi-Fi is kept on, but it gives the opportunity for the UE-Wi-Fi to be turned off if there is no other reason for keeping it turned on.

It should further be appreciated that any of these embodiments may be combined with the embodiments/scenarios discussed in connection with Figures 5 and 6.

As noted above, there may be an interface 370 between the NW-3GPP and the NW-WLAN/Wi-Fi as seen in Figure 3. In some embodiments, the NW-3GPP may request or indicate to the NW-WLAN that a UE should connect to the NW-3GPP. The NW-WLAN could then, according to above embodiments, indicate to the UE-WLAN that the UE's 3GPP parts should be turned on. If for example the UE's 3GPP parts were turned off, the UE may not be reachable by the NW-3GPP. This approach provides a procedure for the NW-3GPP to activate the UE-3GPP and hence enable to reach the UE. A similar, but inverse, behaviour would allow the NW-Wi-Fi to activate the UE-Wi-Fi.

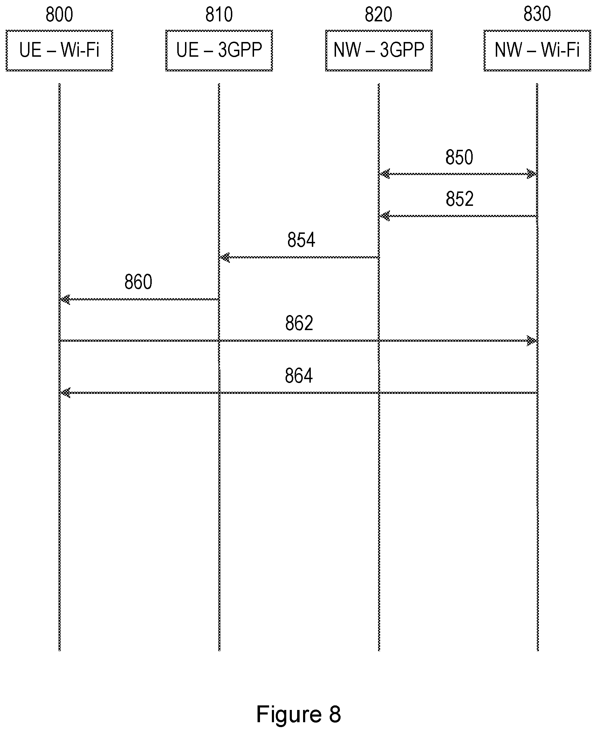

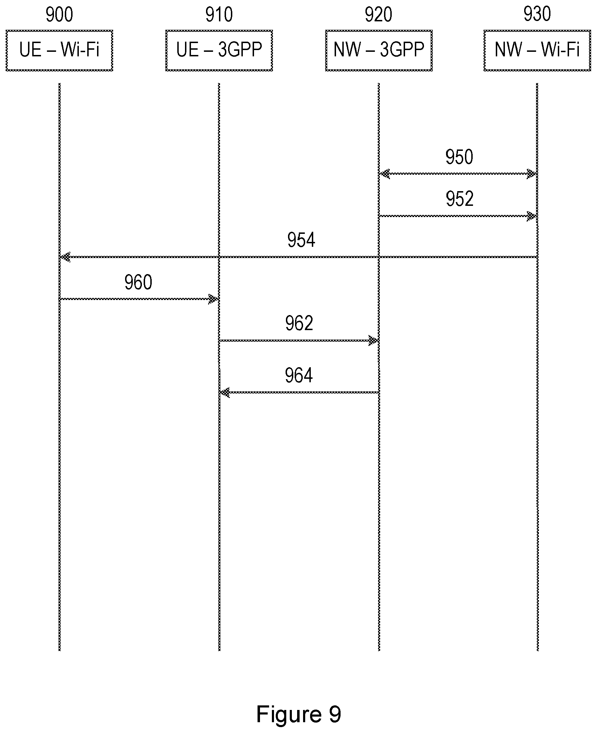

Figures 8 and 9 illustrate examples of this approach. In the embodiment illustrated in Figure 8, there is a communication 850 between the NW-3GPP 820 and NW-Wi-Fi 830. From the NW-Wi-Fi 830 an indication 852 can be sent towards the NW-3GPP 820. This indication can be, for example, an update on the load status of the Wi-Fi network. If this indication is showing that the Wi-Fi side is having low load, this can trigger the NW-3GPP 820 to send an indication 854 to the UE-3GPP 810 including a request to turn on Wi-Fi parts of the UE to explore possibilities to communicate over Wi-Fi. The UE-3GPP 810 transmits an indication 860 to the UE-Wi-Fi 800 to activate and potentially start communication towards NW-Wi-Fi 830. On the other hand, if the indication 852 was showing an overload condition on the NW-Wi-Fi 830, then the indication 854 sent towards the UE-3GPP 810 could be to deactivate the communication towards NW-Wi-Fi 830.

According to an alternative embodiment of the invention, the reception of the indication 852 at the NW-3GPP 820 might not result in the sending of indication 854 towards the UE-3GPP 810. This could be for example, in the case that the indication 852 was an overload indication, but NW-3GPP 820 is aware of the UE context via earlier communications 850 with NW-Wi-Fi 830 that the UE have active traffic on Wi-Fi.

According to an alternative embodiment, the indication 854 from the NW-3GPP 820 may not trigger the sending of indication 860 towards the UE-Wi-Fi 800. One example of this is if the indication 860 was recommending the turning off Wi-Fi, and if the UE-3GPP 810 is already aware that there is active traffic flow over Wi-Fi. Alternatively, if the UE-3GPP is not aware of the UE Wi-Fi status, it can still send it indication 860, the UE-Wi-Fi 800 might decide not to act on this if there is active traffic flow over Wi-Fi.

Figure 9 illustrates another embodiment. Here, there is a communication 950 between the NW-3GPP 920 and NW-Wi-Fi 930. From the NW-3GPP 920 an indication 952 can be sent towards the NW-Wi-Fi 930. This indication can be, for example, an update on the load status of the 3GPP network. If this indication is showing that the 3GPP side is having low load, for example, this can trigger for the NW-Wi-Fi 930 to send an indication 954 to the UE-Wi-Fi 900 including a request to turn on 3GPP of the UE to explore possibilities to communicate over 3GPP. The UE-Wi-Fi 900 transmits an indication 960 to the UE-3GPP 910 to activate and potentially start communication towards NW-3GPP 920. On the other hand, if the indication 952 was showing an overload condition on the NW-3GPP 920, then the indication 954 sent towards the UE-Wi-Fi 900 could be to deactivate the communication towards NW-3GPP 920.

According to an alternative embodiment, the reception of the indication 952 at the NW-Wi-Fi 930 might not result in the sending of indication 954 towards the UE-Wi-Fi 900. This could be for example, in the case that the indication 952 was an overload indication, but NW-Wi-Fi 930 is aware of the UE context via earlier communications 950 with NW-3GPP 920 that the UE has active traffic on 3GPP.

According to an alternative embodiment of the invention, the indication 954 from the NW-Wi-Fi 930 may not trigger the sending of indication 960 towards the UE-3GPP 910. One example of this is if the indication 960 was recommending the turning off Wi-Fi, and if the UE-Wi-Fi 900 is already aware that there is active traffic flow over 3GPP. Alternatively, if the UE-Wi-Fi is not aware of 3GPP status of the UE, it can still send it indication 960, but the UE-3GPP 910 might decide not to act on this if there is active traffic flow over 3GPP.

Once again, it should further be appreciated that any of the embodiments discussed in connection with Figures 8 and 9 may be combined with the embodiments/scenarios discussed in connection with Figures 5, 6, and 7.

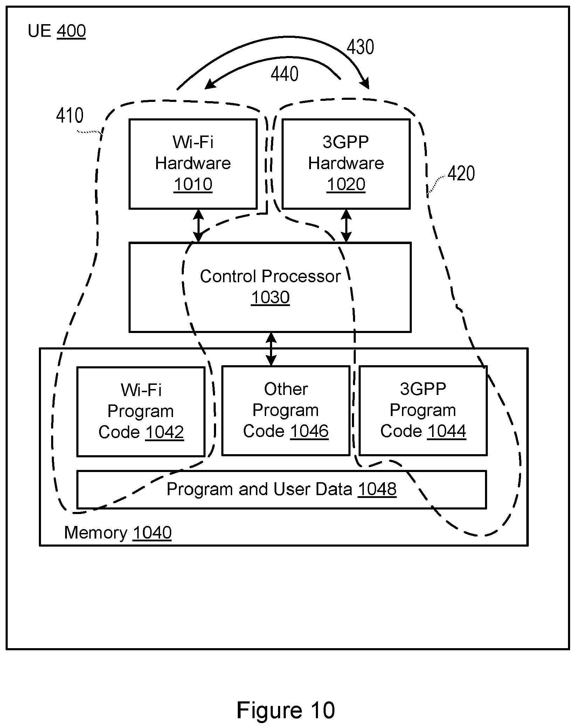

Figure 10 is a block diagram illustrating another representation of UE 400. In this example embodiment, a control processor 1030 (which may include one or several microprocessors, microcontrollers, and/or digital signal processors, in various embodiments) manages Wi-Fi hardware 1010 and 3GPP hardware 1020, each of which may include appropriate radio circuitry and baseband hardware. Control processor 1030 executes program code stored in memory 1040. In some embodiments, this program code includes Wi-Fi program code 1042, 3GPP program code 1044, and other program code 1046. Memory 1040, which may comprise one or several individual devices and/or types of memory, further includes program and user data 1048.

In this example embodiment, control processor 1030 is responsible for running at least part of the Wi-Fi protocol stack, using Wi-Fi program code 1042 and Wi-Fi hardware 1010. Note that parts of the protocol stack may be implemented in Wi-Fi hardware 1010, in some embodiments, in some cases using a processor and firmware included in Wi-Fi hardware 1010. Together, then, the Wi-Fi hardware 1010, the control processor 1030, and the Wi-Fi program code 1042 make up the Wi-Fi modem/processing circuit 410 shown in Figure 4.

Likewise, control processor 1030 in this embodiment is further responsible for running at least part of one or more 3GPP protocol stacks, using 3GPP program code 1044 and 3GPP hardware 1020. Note that parts of the protocol stack may be implemented in 3GPP hardware 1020, in some embodiments, in some cases using a processor and firmware included in 3GPP hardware 1020. Together, then, the 3GPP hardware 1020, the control processor 1030, and the Wi-Fi program code 1044 make up the 3GPP modem/processing circuit 420 shown in Figure 4.

In the illustrated UE 400, interfaces 430 and 440 connect the Wi-Fi modem/processing circuit 410 to and from the 3GPP modem/processing circuit 420. These interfaces carry the activation/de-activation indications discussed above. In various embodiments, these interfaces are implemented directly between Wi-Fi hardware 1010 and 3GPP hardware 1020, while in other embodiments these interfaces are implemented as logical interfaces between logical Wi-Fi and 3GPP functions provided by control processor 1030, using Wi-Fi program code 1042 and 3GPP program code 1044. Other embodiments may use a combination of these approaches.

Although the described solutions may be implemented in any appropriate type of telecommunication system supporting any suitable communication standards and using any suitable components, network-based embodiments of the described solutions may be implemented in one or more nodes of a radio access network (RAN), such as a node in a 3GPP RAN network, such as LTE. These nodes include, but are not limited to, an eNodeB in an LTE network, or a base station or RNC in a UMTS network.

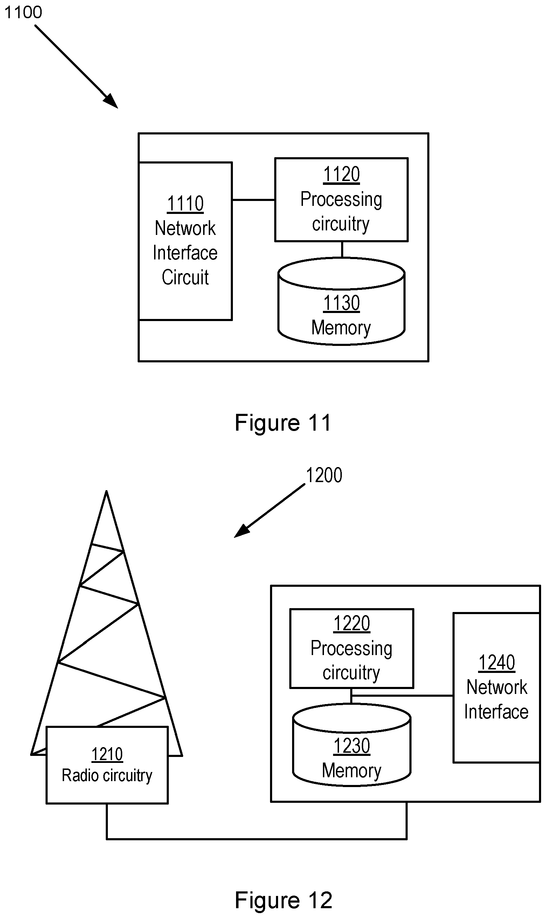

The network in which these techniques are implemented may further include any additional elements suitable to support communication between wireless devices or between a wireless device and another communication device (such as a landline telephone). Although the illustrated network nodes may represent a network communication device that includes any suitable combination of hardware and/or software, these network nodes may, in particular embodiments, represent a device such as the example network node 1100 illustrated in greater detail by Figure 11. Similarly, although the illustrated base station nodes (e.g., an eNB) may represent network nodes that include any suitable combination of hardware and/or software, these network nodes may, in particular embodiments, represent devices such as the example network node 1000 illustrated in greater detail by Figure 12.

As shown in Figure 11, the example network node 1100 includes processing circuitry 1120, a memory 1130, and network interface circuitry 1110. The network interface circuitry 1120 can be used for interfacing with networks operating according to a different radio access technology protocol as described above. In particular embodiments, some or all of the functionality described above as being provided by a core network node or a node in a RAN may be provided by the processing circuitry 1120 executing instructions stored on a computer-readable medium, such as the memory 1130 shown in Figure 11. Alternative embodiments of the network node 1100 may include additional components beyond those shown in Figure 11 that may be responsible for providing certain aspects of the node's functionality, including any of the functionality described above and/or any functionality necessary to support the solutions described above.

As shown in Figure 12, an example network node in the form of a base station 1200 includes processing circuitry 1220, a memory 1230, radio circuitry 1210, and at least one antenna. The processing circuitry 1220 may comprise RF circuitry and baseband processing circuitry (not shown). In particular embodiments, some or all of the functionality described above as being provided by a mobile base station, a radio network controller, a base station controller, a relay node, a NodeB, an enhanced NodeB, and/or any other type of mobile communications node may be provided by the processing circuitry 1220 executing instructions stored on a computer-readable medium, such as the memory 1230 shown in Figure 12. Alternative embodiments of the network node 1200 may include additional components responsible for providing additional functionality, including any of the functionality identified above and/or any functionality necessary to support the solution described above.

As can be seen from the above description and the appended figures, in one aspect of the present invention, a logical communication interface is provided between two different modems and processing instances in a UE, whereby the activity level of one can at least partially be controlled by the other. In some embodiments, this communication interface can enable and disable those parts of the Wi-Fi functionality in the UE that handle communication over the Wi-Fi standards protocol, from a part used for communication over a 3GPP specified interface. The techniques described above introduce a steering possibility of power consuming Wi-Fi related parts in the terminal, such that these parts can be activated or deactivated (put in stand-by mode or other low-power mode) when not needed for connection purposes.

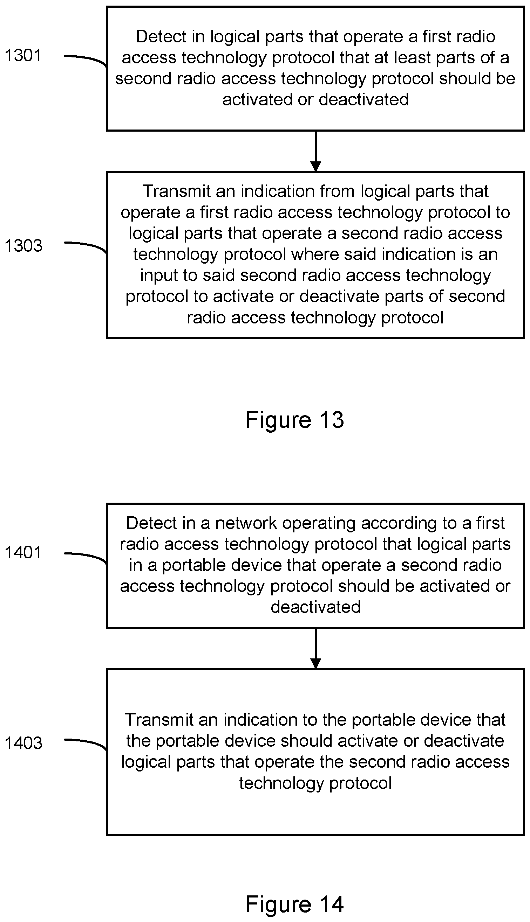

The flow chart in Figure 13 illustrates an exemplary method of operating a portable device/mobile terminal in accordance with an embodiment of the invention. In a first step, step 1301, it is detected in logical parts in the portable device that operate according to a first radio access technology protocol (e.g. one of a 3GPP protocol or an IEEE 802.11 protocol) that at least logical parts that operate according to a second radio access technology protocol (e.g. the other one of a 3GPP protocol or an IEEE 802.11 protocol) should be activated or deactivated.

In the next step, step 1303, the logical parts that operate according to the first radio access technology protocol transmit an indication to the logical parts that operate according to the second radio access technology protocol, with the indication being an input to the second radio access technology protocol (or the logical parts operating according to the second radio access technology protocol) to activate or deactivate the logical parts operating according to the second radio access technology protocol. Examples of this indication are described above with reference to Figures 5-9 (and in particular correspond to signals 554, 654, 760, 860 and 960).

The UE is connected over 3GPP and is served by the LTE radio access technology. At some point, the LTE radio access network, or the UE part handling communication over the LTE radio access network determines that it would be better if the connection is moved from LTE to Wi-Fi instead. This could be triggered by a number of reasons, for example, the quality of the LTE radio connection deteriorates, the load of the LTE network is increased beyond a certain threshold, the priority of the user suggests that Wi-Fi is the preferred choice, the user has started a different service, etc. Other reasons may also trigger the change from LTE to Wi-Fi.

When this happens, the radio network or the UE part handling communication of the LTE radio access network will send a signal to the part of the UE that handles communication over the Wi-Fi radio, ordering it to start up Wi-Fi procedures. At this point, the Wi-Fi part of the UE activates and starts conducting Wi-Fi procedures (such as for example scanning) according to what is previously specified or what is indicated by the signal from the part of the UE that handles communication of the LTE radio network. Alternatively, on receipt of this signal, the Wi-Fi part of the UE determines or evaluates whether the Wi-Fi part should be activated or not before activating the Wi-Fi part (for example the Wi-Fi part can determine the UE battery level).

As a result of the Wi-Fi procedures, any number of actions may be taken, either from the parts of the UE that handles communication over the LTE radio access network, over the Wi-Fi radio access, or commanded from the network side of either the LTE radio access network or the Wi-Fi access point or thereto associated controller nodes and mechanisms.

For example, it may be determined that communication with the UE should now be handled from a Wi-Fi access point that the UE has found during the Wi-Fi procedures. Then, communication may be moved. Or, it may be determined that communication should continue over the LTE radio access network.

In one particular embodiment of the invention, there is an indication forwarded from the network part of the 3GPP-specified radio access network to the UE, to indicate to the part of the UE handling communication over Wi-Fi, to activate parts that are not activated.

For example, as long as there is a good communication channel served over the LTE radio access technology, the Wi-Fi modem and processing parts in the UE are turned off, to save battery. When the LTE signal for one reason or another deteriorates, or if the LTE network becomes overloaded, the Wi-Fi modem and processing parts in the UE are activated.

In another embodiment of the invention, a UE is moving around in an area where there is both Wi-Fi access point coverage and 3GPP RAT coverage. The UE is connected over Wi-Fi and is served over the Wi-Fi access network.

The flow chart in Figure 14 illustrates a general method in a network according to the above embodiments. The network is operating according to a first radio access technology protocol (e.g. one of a 3GPP protocol or an IEEE 802.11 protocol) and is able to control a portable device that is able to communicate over at least the first radio access technology protocol and a second radio access technology protocol (e.g. the other one of the 3GPP protocol or IEEE 802.11 protocol). In these embodiments, logical parts in the portable device that operate according to the first radio access technology protocol are activated so that the portable device is able to communicate with the network operating according to the first radio access technology protocol.

In a first step of the method, step 1401, the network (e.g. a node in the network such as an eNB, a NodeB, a base station, an MME or S-GW, an RNC or BSC) detects that the logical parts in the portable device that operates the second radio access technology protocol should be activated or deactivated.

The network then transmits an indication to the portable device that the portable device should activate or deactivate (as appropriate) the logical parts that operate the second radio access technology protocol (step 1403). This indication is as shown in Figures 5-9 (and in particular signal 552, 652, 755, 854, 954).

As described above, in some embodiments the network node operating according to the first radio access protocol itself takes the decision as to whether the logical parts in the portable device that operates the second radio access technology protocol should be activated or deactivated, and in other embodiments an appropriate indication is received from a (or the) network operating according to the second radio access protocol, as shown by signals 852 and 952 in Figures 8 and 9).

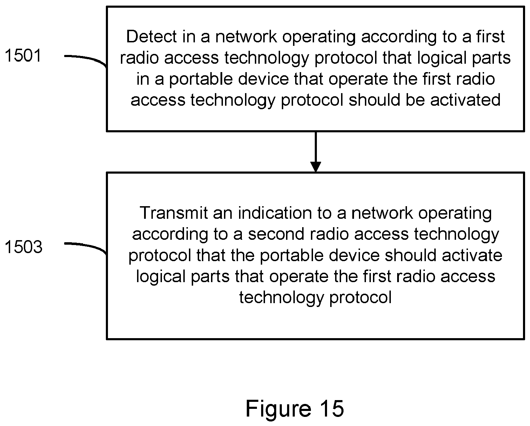

The flow chart in Figure 15 illustrates another general method in a network according to the above embodiments. The network is operating according to a first radio access technology protocol (e.g. one of a 3GPP protocol or an IEEE 802.11 protocol) and is able to control a portable device that is able to communicate over at least the first radio access technology protocol and a second radio access technology protocol (e.g. the other one of the 3GPP protocol or IEEE 802.11 protocol). In these embodiments, logical parts in the portable device that operate according to the first radio access technology protocol are deactivated so that the portable device is not currently able to communicate with the network operating according to the first radio access technology protocol. Instead, the logical parts in the portable device that operate according to the second radio access technology protocol are activated and the portable device is communicating with a network operating according to the second radio access technology protocol.

In the network operating according to the first radio access protocol, in a first step, step 1501, the network detects that the logical parts in the portable device that operate the first radio access technology protocol should be activated. This detection can be as in any of the embodiments described above.

The network operating according to the first radio access technology protocol then transmits an indication to the network operating according to the second radio access technology that the portable device should activate the logical parts that operate the first radio access technology protocol (step 1503). This indication corresponds to signals 852 and 952 in Figures 8 and 9.

The indication signal sent towards the UE-3GPP or UE-Wi-Fi part can contain extra information in addition to activation or deactivation. As an example, the UE-Wi-Fi activation indication signal may contain information about what the Wi-Fi part of the UE will do (e.g. an action for the Wi-Fi part to take in addition to activating or deactivating); scan for certain APs, scan/associate/authenticate only to an AP with which the UE has a signal level above a certain RSSI threshold and/or has a load below a certain threshold as broadcasted by the WLAN AP (or gathered via probing messages towards the AP before associations), and/or when the quality (e.g. signal strength, Ec/No (the received energy per chip divided by the power density in the band), packet loss, BER (bit error rate), BLER(block error rate)) of the 3GPP-specific radio access is below a certain threshold, information about specifics of, e.g., AP types or APs connected to specific operators, etc.

As another example the UE-3GPP activation indication signal may contain information about what the 3GPP part of the UE will do (e.g. an action for the 3GPP part to take in addition to activating or deactivating); scan for certain cells (e.g. identified by cell id, PLMN id (public land mobile network id), scrambling code, BSIC (base station identity code)), scan on certain frequencies, scan/associate/attach only when the UE has a signal level above a certain threshold and/or has a load below a certain threshold if broadcasted by the 3GPP specific radio access and/or when the quality (e.g. signal strength, Ec/No, packet loss, BER, BLER) of the Wi-Fi radio access is below a certain threshold, information about specifics of, e.g. eNB types or eNBs connected to specific operators, etc.

While it usually may be a changing connection quality that is a trigger for activating parts of a UE that are put in stand-by mode, other reasons may be possible. For example, for IFOM or MAPCON-capable UEs, the activation may very well be triggered by the fact that connections are to be added, such that UEs may communicate over two radio accesses at the same time. Another example is the case where the UE or network finds out that the server hosting the application/service the UE is accessing is capable of multipath TCP (transmission control protocol) or other user plane aggregation functionality, and as such the UE might benefit from the activation of the other interface and establishment of another data path the higher layer protocols (e.g. multipath TCP) can exploit.

Some other reasons (with corresponding examples) for triggering activating/deactivating the UE-3GPP or UE-Wi-Fi parts are given below:
- UE mobility: When the UE or network detects that the UE is moving at speeds higher than a certain threshold, the UE-Wi-Fi part might get deactivated. Similarly, when the UE speed falls below a certain threshold, the UE-Wi-Fi part might get activated again.
- UE location: If the UE's location is known or can be estimated (e.g. GPS, radio triangulation, etc...) and the two networks are also informed about each other's location (e.g. configuration via operations and maintenance (OAM) during deployment, or location information gathered via some self-organising network (SON) mechanism), the UE-Wi-Fi or UE-3GPP parts can be deactivated when the UE is not in the vicinity of the NW-Wi-Fi or NW-3GPP, respectively. Similarly, the UE-Wi-Fi or UE-3GPP parts can be re-activated when the UE approaches the vicinity of the NW-Wi-Fi or NW-3GPP, respectively.

- Throughput: When the throughput of a UE falls below a certain level in one network (NW-3GPP or NW-Wi-Fi), it might be beneficial to either try to serve the user via the other network (NW-Wi-Fi or NW-3GPP, respectively) or to use both networks where some part of the traffic is routed via NW-3GPP and others are routed via NW-Wi-Fi. To this effect, the triggering can be done by exchanging indications between the two networks (as in Figures 8 and 9), or directly towards the UE (as in Figures 5 and 6). As discussed above, the triggering can be done autonomously by the UE without the need for receiving indications from the network.
- Data volume: Similar to the throughput case above, the triggering could be initiated when the data volume or the buffer status of the UE (in uplink (UL), downlink (DL), or both) of the UE (either instantaneous or averaged/filtered over a given duration) falls below or rises above a certain threshold.
- Battery level: The triggering can also be initiated based on the current level of the UE battery. As an example, if the UE has low battery, the UE-Wi-Fi can be turned off (autonomously by logic in the UE-Wi-Fi or by an indication from UE-3GPP, or message from NW-Wi-Fi or NW-3GPP if they are aware of the UE battery conditions).

It should be noted that the indications that are sent towards the UE to activate/deactivate the UE-Wi-Fi or UE-3GPP can be sent to the UE in a unicast or broadcast manner. For example, in Figure 8, NW-3GPP 820, upon finding from indication 852 that the NW-Wi-Fi 830 is not loaded anymore, can broadcast the indication 854 towards all its UEs recommending them to turn on their UE-Wi-Fi, to create an opportunity for offloading some of the load of the NW-3GPP 820 towards NW-Wi-Fi 830. Similarly, if the NW-3GPP 820 finds out that NW-Wi-Fi 830 is overloaded from the indication 852 that it has received, it can broadcast an indication 854 towards all its UEs telling them to turn off their Wi-Fi (as indicated above UEs can ignore this request if they are already connected to the Wi-Fi and having active data transmission over the Wi-Fi network).

The indications to turn off /deactivate the UE-Wi-Fi or UE-3GPP part can include an optional parameter which indicates the validity of this indication. For example, a timer value can be specified which tells the UE-Wi-Fi or UE-3GPP part to be reactivated again when the timer expires. Instead of a timer value, actual timestamps can be specified until which the indication is valid. An even more comprehensive behaviour can be achieved by having several timestamps with different indications. As an example, the indication can include the timestamp values and associated indications like [8am to 9am, OFF], [9am to 5pm, ON] [5pm to 8pm, OFF] [8pm to 11pm, ON] [11pm to 6am OFF], to ensure that the Wi-Fi radio is turned on when the user is at home or office. Alternatively, periodic activation times can be sent along with a deactivation indication. For example, the UE-Wi-Fi can be deactivated but it is also indicated that it could be activated after some duration (e.g. 30 minutes) and if no Wi-Fi network (or particular ones with certain SSIDs, PLMN support, etc...) are not detected within certain duration (e.g. 1 minute), the Wi-Fi is deactivated again.

Although the present invention has been described with examples that include a communication system compliant to the 3GPP specified LTE standard specification, it should be noted that the solutions presented may be equally well applicable to any other 3GPP specified technology in combination with 802.11 specifications. The specific embodiments described above and below should therefore be considered exemplary rather than limiting the scope of the invention. Because it is not possible, of course, to describe every conceivable combination of components or techniques, those skilled in the art will appreciate that the present invention can be implemented in other ways than those specifically set forth herein, without departing from essential characteristics of the invention. The example embodiments below are thus to be considered in all respects as illustrative and not restrictive.

The scope of the invention is defined by the appended claims.

## Claims

1. A method for controlling different parts of a terminal that are able to communicate over at least a first radio access technology protocol and a second radio access technology protocol, where said first and second radio access technology protocols are different and wherein said method includes the steps of:
- detecting (1301) in logical parts that operate a first radio access technology protocol that at least parts of a second radio access technology protocol should be activated or deactivated;
- transmitting (1303) an indication from logical parts that operate a first radio access technology protocol to logical parts that operate a second radio access technology protocol where said indication is an input to said logical parts that operate the second radio access technology protocol to activate or deactivate parts of second radio access technology protocol; **characterized in that** wherein detecting (1301) in the logical parts that operates the first radio access technology protocol that at least parts of the second radio access technology protocol should be activated or deactivated includes receiving a request for transmitting such an indication from the network node of said first radio access technology protocol.

2. A method according to claim 1, wherein said first radio access technology protocol is a radio access technology protocol according to the 3GPP standard and wherein said second radio access technology protocol is a radio access technology protocol according to the IEEE 802.11 standard.

3. A method according to claim 1, wherein said first radio access technology protocol is a radio access technology protocol according to the IEEE 802.11 standard and wherein said second radio access technology protocol is a radio access technology protocol according to the 3GPP standard.

4. A method according to claims 2 or 3, wherein the radio access technology protocol according to the 3GPP standard is LTE, GSM or WCDMA.

5. A method according to any of claims 1-4, wherein the method further comprises the step of:
in response to receiving the request for transmitting such an indication from the network side of said first radio access technology protocol, detecting the radio quality and/or performance; and
determining whether to transmit the indication from logical parts that operates the first radio access technology protocol to logical parts that operates the second radio access technology protocol based on the detected radio quality and/or performance.

6. A method according to any of claims 1-5, wherein transmitting (1303) the indication from logical parts that operate a first radio access technology protocol to logical parts that operate a second radio access technology protocol where said indication is an input to said logical parts that operate the second radio access technology protocol to activate or deactivate parts of second radio access technology protocol includes an indication to activate or deactivate a radio modem.

7. A method according to any of claims 1-6, wherein the indication is an input to said logical parts that operate the second radio access technology protocol to activate parts of second radio access technology protocol, and wherein the method further comprises the step of:
activating the logical parts that operate the second radio access protocol in response to the indication.

8. A terminal (400) configured for communication over at least a first radio access technology protocol and a second radio access technology protocol, where said first and second radio access technology protocols are different, said terminal (400) comprising:
- a first modem/processing circuit (410) adapted for communication over the first radio access protocol; and
- a second modem/processing circuit (420) adapted for communication over the second radio access protocol;
wherein the first modem/processing circuit (410) is further adapted to:
- detect that at least parts of the second modem/processing circuit (420) should be activated or deactivated; and
- transmit an indication to the second modem/processing circuit (420), where said indication is an input to the second modem/processing circuit (420) to activate or deactivate parts of second radio access technology protocol; **characterized in that** wherein the first modem/processing circuit (410) is adapted to detect that at least parts of the second modem/processing circuit (420) should be activated or deactivated by receiving a request for transmitting such an indication from the network node of said first radio access technology protocol.

9. A terminal (400) according to claim 8, wherein said first radio access technology protocol is a radio access technology protocol according to the 3GPP standard and wherein said second radio access technology protocol is a radio access technology protocol according to the IEEE 802.11 standard.

10. A method for use in a network node in a network operating according to a first radio access technology protocol for controlling a terminal that is able to communicate over at least the first radio access technology protocol and a second radio access technology protocol, where said first and second radio access technology protocols are different, said method includes the steps of:
- detecting (1401) in the network node that logical parts in the terminal that operates a second radio access technology protocol should be activated or deactivated; and
- transmitting (1403) an indication to the terminal that the terminal should activate or deactivate the logical parts that operate the second radio access technology protocol.

11. A method according to claim 10, wherein the step of detecting (1401) in the network node that logical parts in the terminal that operates a second radio access technology protocol should be activated or deactivated comprises receiving an indication from a network that operates the second radio access technology protocol.

12. A network node (1100; 1200) for use in a network operating according to a first radio access technology protocol, the network node being for use with a terminal (400) that is able to communicate over at least the first radio access technology protocol and a second radio access technology protocol, where said first and second radio access technology protocols are different, the network node comprising processing circuitry (1120; 1220) adapted to:
- detect that logical parts (420) in the terminal (400) that operates a second radio access technology protocol should be activated or deactivated; and
- transmit an indication to the terminal (400) that the terminal (400) should activate or deactivate the logical parts (420) that operate the second radio access technology protocol.

## Patentansprüche

1. Verfahren zum Steuern unterschiedlicher Teile eines Endgeräts, die imstande sind, über mindestens ein erstes Funkzugangstechnologieprotokoll und ein zweites Funkzugangstechnologieprotokoll zu kommunizieren, wobei das erste und das zweite Funkzugangstechnologieprotokoll unterschiedlich sind und worin das Verfahren die Schritte einschließt:
- Ermitteln (1301) in logischen Teilen, die ein erstes Funkzugangstechnikprotokoll betreiben, dass zumindest Teile eines zweiten Funkzugangstechnikprotokolls aktiviert oder deaktiviert werden sollten;
- Übertragen (1303) eines Hinweises von logischen Teilen, die ein erstes Funkzugangstechnologieprotokoll betreiben, zu logischen Teilen, die ein zweites Funkzugangstechnologieprotokoll betreiben, wobei der Hinweis eine Eingabe in die logischen Teile ist, die das zweite Funkzugangstechnologieprotokoll betreiben, um Teile des zweiten Funkzugangstechnologieprotokolls zu aktivieren oder zu deaktivieren;
**dadurch gekennzeichnet, dass**
das Ermitteln (1301) in den logischen Teilen, die das erste Funkzugangstechnologieprotokoll betreiben, dass zumindest Teile des zweiten Funkzugangstechnologieprotokolls aktiviert oder deaktiviert werden sollten, einschließt: Empfangen einer Anforderung zum Übertragen eines solchen Hinweises vom Netzwerkknoten des ersten Funkzugangstechnologieprotokolls.

2. Verfahren nach Anspruch 1, worin das erste Funkzugangstechnologieprotokoll ein Funkzugangstechnologieprotokoll nach dem 3GPP-Standard ist und worin das zweite Funkzugangstechnologieprotokoll ein Funkzugangstechnologieprotokoll nach dem Standard IEEE 802.11 ist.

3. Verfahren nach Anspruch 1, worin das erste Funkzugangstechnologieprotokoll ein Funkzugangstechnologieprotokoll nach dem Standard IEEE 802.11 ist und worin das zweite Funkzugangstechnologieprotokoll ein Funkzugangstechnologieprotokoll nach dem 3GPP-Standard ist.

4. Verfahren nach Anspruch 2 oder 3, worin das Funkzugangstechnologie-Protokoll nach dem 3GPP-Standard LTE, GSM oder WCDMA ist.

5. Verfahren nach einem der Ansprüche 1 bis 4, wobei das Verfahren ferner die Schritte umfasst:
als Antwort auf das Empfangen der Anforderung zum Übertragen eines solchen Hinweises von der Netzwerkseite des ersten Funkzugangstechnologieprotokolls erfolgendes Ermitteln der Funkqualität und/oder -leistung; und
auf der ermittelten Funkqualität und/oder -leistung beruhendes Bestimmen, ob der Hinweis von logischen Teilen, die das erste Funkzugangstechnologieprotokoll betreiben, zu logischen Teilen, die das zweite Funkzugangstechnologieprotokoll betreiben, übertragen werden soll.

6. Verfahren nach einem der Ansprüche 1 bis 5, worin das Übertragen (1303) eines Hinweises von logischen Teilen, die ein erstes Funkzugangstechnologieprotokoll betreiben, zu logischen Teilen, die ein zweites Funkzugangstechnologieprotokoll betreiben, wobei der Hinweis eine Eingabe in die logischen Teile ist, die das zweite Funkzugangstechnologieprotokoll betreiben, um Teile des zweiten Funkzugangstechnologieprotokolls zu aktivieren oder zu deaktivieren, einen Hinweis einschließt, ein Funkmodem zu aktivieren oder zu deaktivieren.

7. Verfahren nach einem der Ansprüche 1 bis 6, worin der Hinweis eine Eingabe in die logischen Teile ist, die das zweite Funkzugriffstechnologieprotokoll betreiben, um Teile des zweiten Funkzugriffstechnologieprotokolls zu aktivieren, und worin das Verfahren ferner den Schritt umfasst:
als Antwort auf den Hinweis erfolgendes Aktivieren der logischen Teile, die das zweite Funkzugriffsprotokoll betreiben.

8. Endgerät (400), das zur Kommunikation über mindestens ein erstes Funkzugangstechnologieprotokoll und ein zweites Funkzugangstechnologieprotokoll konfiguriert ist, wobei das erste und das zweite Funkzugangstechnologieprotokoll unterschiedlich sind, wobei das Endgerät (400) umfasst:
- eine erste Modem-/Verarbeitungsschaltung (410), die für die Kommunikation über das erste Funkzugriffsprotokoll eingerichtet ist; und
- eine zweite Modem-/Verarbeitungsschaltung (420), die für die Kommunikation über das zweite Funkzugriffsprotokoll eingerichtet ist;
worin die erste Modem-/Verarbeitungsschaltung (410) ferner dafür eingerichtet ist:
- zu ermitteln, dass zumindest Teile der zweiten Modem-/Verarbeitungsschaltung (420) aktiviert oder deaktiviert werden sollten; und
- einen Hinweis zur zweiten Modem-/Verarbeitungsschaltung (420) zu übertragen, wobei der Hinweis eine Eingabe in die zweite Modem-/Verarbeitungsschaltung (420) ist, um Teile des zweiten Funkzugangstechnologieprotokolls zu aktivieren oder zu deaktivieren;
**dadurch gekennzeichnet, dass**
die erste Modem-/Verarbeitungsschaltung (410) dafür eingerichtet ist, zu ermitteln, dass zumindest Teile der zweiten Modem-/Verarbeitungsschaltung (420) aktiviert oder deaktiviert werden sollten, indem eine Anforderung zum Übertragen eines solchen Hinweises vom Netzwerkknoten des ersten Funkzugriffstechnologieprotokolls empfangen wird.

9. Endgerät (400) gemäß Anspruch 8, worin das erste Funkzugangstechnologieprotokoll ein Funkzugangstechnologieprotokoll gemäß dem 3GPP-Standard ist und worin das zweite Funkzugangstechnologieprotokoll ein Funkzugangstechnologieprotokoll gemäß dem Standard IEEE 802.11 ist.

10. Verfahren zur Verwendung in einem Netzwerkknoten in einem Netzwerk, das gemäß einem ersten Funkzugriffstechnologieprotokoll arbeitet, zum Steuern eines Endgeräts, das imstande ist, über mindestens das erste Funkzugriffstechnologieprotokoll und ein zweites Funkzugriffstechnologieprotokoll zu kommunizieren, wobei das erste und das zweite Funkzugriffstechnologieprotokoll unterschiedlich sind, wobei das Verfahren die Schritte einschließt:
- Ermitteln (1401) im Netzwerkknoten, dass logische Teile in dem Endgerät, das ein zweites Funkzugangstechnologieprotokoll betreibt, aktiviert oder deaktiviert werden sollten; und
- Übertragen (1403) eines Hinweises an das Endgerät, dass das Endgerät die logischen Teile, die das zweite Funkzugangstechnologieprotokoll betreiben, aktivieren oder deaktivieren sollte.

11. Verfahren nach Anspruch 10, worin der Schritt des Ermittelns (1401) im Netzwerkknoten, dass logische Teile in dem Endgerät, das ein zweites Funkzugangstechnologieprotokoll betreibt, aktiviert oder deaktiviert werden sollten, das Empfangen eines Hinweises von einem Netzwerk umfasst, welches das zweite Funkzugriffstechnologieprotokoll betreibt.

12. Netzwerkknoten (1100; 1200) zur Verwendung in einem Netzwerk, das gemäß einem ersten Funkzugriffstechnologieprotokoll arbeitet, wobei der Netzwerkknoten zur Verwendung mit einem Endgerät (400) vorgesehen ist, das imstande ist, über mindestens das erste Funkzugriffstechnologieprotokoll und ein zweites Funkzugriffstechnologieprotokoll zu kommunizieren, wobei das erste und das zweite Funkzugriffstechnologieprotokoll unterschiedlich sind, wobei der Netzwerkknoten eine Verarbeitungsschaltung (1120; 1220) umfasst, die dafür eingerichtet ist:
- zu ermitteln, dass logische Teile (420) in dem Endgerät (400), das ein zweites Funkzugangstechnologieprotokoll betreibt, aktiviert oder deaktiviert werden sollten; und
- einen Hinweis zum Endgerät (400) zu übertragen, dass das Endgerät (400) die logischen Teile (420), die das zweite Funkzugangstechnologieprotokoll betreiben, aktivieren oder deaktivieren sollte.

## Revendications

1. Procédé pour commander différentes parties d'un terminal qui disposent de la capacité de communiquer sur au moins un premier protocole de technologie d'accès radio et un second protocole de technologie d'accès radio, dans lequel lesdits premier et second protocoles de technologie d'accès radio sont différents et dans lequel ledit procédé inclut les étapes constituées par :
- la détection (1301), dans des parties logiques qui font fonctionner un premier protocole de technologie d'accès radio, du fait qu'au moins des parties d'un second protocole de technologie d'accès radio doivent être activées ou désactivées ;
- la transmission (1303) d'une indication depuis des parties logiques qui font fonctionner un premier protocole de technologie d'accès radio jusqu'à des parties logiques qui font fonctionner un second protocole de technologie d'accès radio, dans lequel ladite indication est une entrée sur lesdites parties logiques qui font fonctionner le second protocole de technologie d'accès radio afin d'activer ou de désactiver des parties du second protocole de technologie d'accès radio ;
**caractérisé en ce que** :
la détection (1301), dans les parties logiques qui font fonctionner le premier protocole de technologie d'accès radio, du fait qu'au moins des parties du second protocole de technologie d'accès radio doivent être activées ou désactivées inclut la réception d'une requête pour transmettre une telle indication depuis le noeud de réseau dudit premier protocole de technologie d'accès radio.

2. Procédé selon la revendication 1, dans lequel ledit premier protocole de technologie d'accès radio est un protocole de technologie d'accès radio conformément au standard 3GPP et dans lequel ledit second protocole de technologie d'accès radio est un protocole de technologie d'accès radio conformément au standard IEEE 802.11.

3. Procédé selon la revendication 1, dans lequel ledit premier protocole de technologie d'accès radio est un protocole de technologie d'accès radio conformément au standard IEEE 802.11 et dans lequel ledit second protocole de technologie d'accès radio est un protocole de technologie d'accès radio conformément au standard 3GPP.

4. Procédé selon la revendication 2 ou 3, dans lequel le protocole de technologie d'accès radio conformément au standard 3GPP est LTE, GSM ou WCDMA.

5. Procédé selon l'une quelconque des revendications 1 à 4, dans lequel le procédé comprend en outre les étapes constituées par :
en réponse à la réception de la requête pour transmettre une telle indication depuis le côté de réseau dudit premier protocole de technologie d'accès radio, la détection de la qualité et/ou de la performance radio ; et
la détermination de si oui ou non il convient de transmettre l'indication depuis des parties logiques qui font fonctionner le premier protocole de technologie d'accès radio jusqu'à des parties logiques qui font fonctionner le second protocole de technologie d'accès radio sur la base de la qualité et/ou de la performance radio détectée.

6. Procédé selon l'une quelconque des revendications 1 à 5, dans lequel la transmission (1303) de l'indication depuis des parties logiques qui font fonctionner un premier protocole de technologie d'accès radio jusqu'à des parties logiques qui font fonctionner un second protocole de technologie d'accès radio, où ladite indication est une entrée sur lesdites parties logiques qui font fonctionner le second protocole de technologie d'accès radio afin d'activer ou de désactiver des parties du second protocole de technologie d'accès radio, inclut une indication afin d'activer ou de désactiver un modem radio.

7. Procédé selon l'une quelconque des revendications 1 à 6, dans lequel l'indication est une entrée sur lesdites parties logiques qui font fonctionner le second protocole de technologie d'accès radio afin d'activer des parties du second protocole de technologie d'accès radio, et dans lequel le procédé comprend en outre l'étape constituée par :
l'activation des parties logiques qui font fonctionner le second protocole de technologie d'accès radio en réponse à l'indication.

8. Terminal (400) configuré pour une communication sur au moins un premier protocole de technologie d'accès radio et un second protocole de technologie d'accès radio, dans lequel lesdits premier et second protocoles de technologie d'accès radio sont différents, ledit terminal (400) comprenant :
- un premier circuit de modem/traitement (410) qui est adapté pour une communication sur le premier protocole de technologie d'accès radio ; et
- un second circuit de modem/traitement (420) qui est adapté pour une communication sur le second protocole de technologie d'accès radio ;
dans lequel le premier circuit de modem/traitement (410) est en outre adapté de manière à ce qu'il réalise les actions qui suivent :
- la détection du fait qu'au moins des parties du second circuit de modem/traitement (420) doivent être activées ou désactivées ; et
- la transmission d'une indication au second circuit de modem/traitement (420), dans lequel ladite indication est une entrée sur le second circuit de modem/traitement (420) afin d'activer ou de désactiver des parties du second protocole de technologie d'accès radio ;
**caractérisé en ce que** :
le premier circuit de modem/traitement (410) est adapté de manière à ce qu'il détecte qu'au moins des parties du second circuit de modem/traitement (420) doivent être activées ou désactivées au moyen de la réception d'une requête pour transmettre une telle indication depuis le noeud de réseau dudit premier protocole de technologie d'accès radio.

9. Terminal (400) selon la revendication 8, dans lequel ledit premier protocole de technologie d'accès radio est un protocole de technologie d'accès radio conformément au standard 3GPP et dans lequel ledit second protocole de technologie d'accès radio est un protocole de technologie d'accès radio conformément au standard IEEE 802.11.

10. Procédé pour une utilisation dans un noeud de réseau dans un réseau qui fonctionne conformément à un premier protocole de technologie d'accès radio pour commander un terminal qui dispose de la capacité de communiquer sur au moins le premier protocole de technologie d'accès radio et un second protocole de technologie d'accès radio, dans lequel lesdits premier et second protocoles de technologie d'accès radio sont différents, ledit procédé inclut les étapes constituées par :
- la détection (1401) dans le noeud de réseau du fait que des parties logiques dans le terminal qui fait fonctionner un second protocole de technologie d'accès radio doivent être activées ou désactivées ; et
- la transmission (1403) d'une indication au terminal consistant en ce que le terminal doit activer ou désactiver les parties logiques qui font fonctionner le second protocole de technologie d'accès radio.

11. Procédé selon la revendication 10, dans lequel l'étape de détection (1401) dans le noeud de réseau du fait que des parties logiques dans le terminal qui fait fonctionner un second protocole de technologie d'accès radio doivent être activées ou désactivées comprend la réception d'une indication en provenance d'un réseau qui fait fonctionner le second protocole de technologie d'accès radio.

12. Noeud de réseau (1100 ; 1200) pour une utilisation dans un réseau qui fonctionne conformément à un premier protocole de technologie d'accès radio, le noeud de réseau étant prévu pour une utilisation avec un terminal (400) qui dispose de la capacité de communiquer sur au moins le premier protocole de technologie d'accès radio et un second protocole de technologie d'accès radio, dans lequel lesdits premier et second protocoles de technologie d'accès radio sont différents, le noeud de réseau comprenant un circuit de traitement (1120 ; 1220) qui est adapté de manière à ce qu'il réalise les actions constituées par :
- la détection du fait que des parties logiques (420) dans le terminal (400) qui fait fonctionner un second protocole de technologie d'accès radio doivent être activées ou désactivées ; et
- la transmission d'une indication au terminal (400) consistant en ce que le terminal (400) doit activer ou désactiver les parties logiques (420) qui font fonctionner le second protocole de technologie d'accès radio.
